# EUROPEAN PATENT APPLICATION

(11) **EP 4 586 212 A1**
(43) Date of publication of application: **16.07.2025**
(21) Application number: 24151978.4
(22) Date of filing: 15.01.2024
(51) Int. Cl.: G06V 10/764, G06V 10/82, G06V 20/52, G06V 20/64

(54) **LUGGAGE DETECTION METHOD BASED ON MACHINE LEARNING**

(71) Applicant: dormakaba Schweiz AG, 8623 Wetzikon (CH)
(72) Inventor: MARC, Faresse, CH 1553 Châtonnayage (CH)
(74) Representative: Balder IP Law, S.L.

(57) **Abstract**

According to a first aspect of the present invention, a computer-implemented luggage detection method is provided. The method may involve receiving image data captured by at least one optical sensor device. This image data may consist of at least one capture of a physical luggage item carried by a person. The method may further involve processing the image data using a processing machine learning model, and assigning to each of the at least one capture a probability value. This value may indicate the probability that the physical luggage item belongs to a respective luggage type class out of a plurality of luggage type classes.

## Description

### FIELD OFTHE INVENTION

The present invention generally relates to computer-implemented methods for luggage detection. It is particularly concerned with processing image data obtained from optical sensors to determine the type of luggage being carried by a person.

### BACKGROUND OF THE INVENTION

Traditional methods of luggage detection and classification often rely heavily on manual human intervention, such as security personnel physically examining luggage at checkpoints or using x-ray systems to scan luggage contents. However, such methods tend to be labour-intensive, prone to errors and discrepancies arising from human judgment, and often cause delays and inconvenience to travelers.

Automated systems that leverage computer vision technologies have been introduced to improve efficiency and accuracy in luggage detection and classification. However, existing systems mainly focus on the detection and identification of specific prohibited items within luggage and do not provide robust classification of the luggage themselves. Other existing solutions focus solely on a luggage size thus typically requiring significant computational resources due to the complex image processing algorithms employed.

Thus, there exists a need for an efficient and resource-friendly method to detect luggage items operating effectively even in large-scale, high-traffic environments such as airports or bus stations.

The main object of the present invention is to provide a computer-implemented luggage detection method that addresses the shortcomings of the existing methods and systems.

### SUMMARY OF THE INVENTION

The invention is defined in the independent claims. Advantageous embodiments and refinements are characterized in the dependent claims and the subsequent description.

According to a first aspect of the present invention, a computer-implemented luggage detection method is provided. The method may involve receiving image data captured by at least one optical sensor device. This image data may consist of at least one capture of a physical luggage item carried by a person. The method may further involve processing the image data using a processing machine learning model, and assigning to each of the at least one capture a probability value. This value may indicate the probability that the physical luggage item belongs to a respective luggage type class out of a plurality of luggage type classes.

Notably, the processing may be performed based on the pixel arrangement in the captures, which is interpreted as an indicator of the luggage type. This is done regardless of the size of the physical luggage item. In other words, processing may be performed without estimating a size of the physical luggage item.

This innovative approach uses a machine learning model to analyze image data from optical sensors and assign probability values indicating the likely type of luggage being carried by an individual. The use of such a model presents a more efficient, reliable, and technologically advanced method of luggage detection compared to traditional methods.

The term "optical sensor device" can be understood as any type of sensor device that uses light or changes in light to detect events or changes in its environment. These devices could include cameras, infrared sensors, photodiodes, and/or the like. In the present context, it pertains to devices that capture visual or image data of luggage items carried by individuals.

The term "capture" in the present context of the luggage detection method refers to a single instance of an image or visual data obtained by the optical sensor device. This could be a snapshot, frame, or a segment of a video stream that pictorially represents the physical luggage item. This capture forms part of the larger image data that the method processes and analyzes to detect and classify luggage items.

The term "image data" can be understood as the visual representations caught on camera or other optical sensor devices. It consists of pixel information or digital images that depict certain subjects, in our case, physical luggage items carried by people.

The term "physical luggage item" refers to any piece of luggage or bag or case or alike used to carry personal belongings by a person while traveling.

The phrase "processing machine learning model" refers to the computerized model, built on algorithms and statistical methods, that the system uses to analyze and interpret complex image data. This model takes in the image data as an input and uses an established learning process to provide useful outputs - here, a recognition and classification of luggage items.

The term "pixel arrangement" can be understood as how pixels are organized or formed in a particular image. In this context, it is used as a determinant of luggage type. The machine learning model identifies specific arrangements of pixels, patterns, or identifiers that are unique to different types of luggage.

The term "luggage type class" refers to the categorization of luggage items based on some common attributes or features. These classes could be based on shape, utility, specific characteristic features. In other words, the luggage type classes could be predefined classes where each class pertains to a particular type of luggage, for instance, class 1 could be suitcases, class 2 could be backpacks, class 3 could be duffle bags, and/or the like. A "luggage type class" may be defined independent from a particular luggage size. For example, in case of a duffle bag or backpack, there are various sized available, but classification does not consider size.

The concept according to the present invention provides a novel approach in the field of luggage detection and classification, making it an efficient and robust solution compared to existing methods. In particular, the classification of luggage items based on the interpretation of the pixel arrangement of an image adds a new layer of convenience to luggage detection. Instead of relying on manual effort or the physical dimensions of the luggage items, which could potentially be inaccurate or difficult to perceive in crowded or low visibility environments, the method offers a more streamlined, accurate, and efficient solution. Further, the processing resources are kept low due to the fact that luggage type classes are defined, and luggage items are classified accordingly, independent of any size. Whenever size is considered, a large amount of processing resources is needed. By reducing the need for processing resources, the method may be performed on premise, i.e., on-site in an airport or bus station or train station and/or the like.

The approach of classifying luggage items based on a processing machine learning model that assigns probability values to image captures brings several technical advantages. The ability to classify luggage items without estimating their size is particularly advantageous. This eliminates the need for complex 3D modelling or depth-sensing technologies, which are generally resource-intensive and may pose technical challenges in accurately determining luggage size, particularly in crowded environments. Thus, the method is faster and more efficient, relieving computation strain on the system.

The concept of using probability values in classifying luggage items makes the method more robust and flexible. Rather than employing a hard assignment that could lead to errors due to slight variations or anomalies in image data, the method acknowledges the inherent uncertainty in image-based classification tasks and uses it to deliver a more nuanced and accurate classification output.

Furthermore, the implications of this method extend far beyond the realm of travel and transportation. It could be integrated into security systems, loss prevention strategies in retail contexts, baggage handling in hotels, or any situation where identifying and classifying objects are of importance.

More benefits and applications of this approach will be illustrated in the forthcoming sections dealing with preferred embodiments.

The method could further provide that the processing step is performed regardless of the size of the physical luggage item, in particular, without estimating a size of the physical luggage item.

This arrangement brings forth a substantial advantage in the realm of luggage detection - the capacity to classify luggages irrespective of their size. This differentiation offers a much more straightforward, practical method for luggage detection. Traditional methods often involve dimension estimations, which can result in inaccuracies or misinformation, especially if the size of the luggage item is obscured or not clearly visible.

In contrast, by focusing on pixel arrangements in image data and not concerning with the size of the luggage item, this method proposes a more reliable and efficient solution to luggage detection. It eradicates the need for complex dimensional estimations, heavy computational models, or even dependency on high-resolution, high-quality image data.

Moreover, size independence enables the method's applicability in a wide variety of situations. Institutional settings where the physical dimensions of luggage items vary significantly come to mind, or in scenarios where luggage items are often obscured or overlap each other.

In essence, this feature fosters an adaptable and user-friendly luggage detection method that amplifies security measures while boosting the recognition and classification process. By amalgamating pixel arrangement interpretation with machine learning, this method conveys a luggage detection system tailored for the digital age. 2 The method may also comprise that the processing machine learning model comprises a Convolutional Neural Network (CNN) architecture.

This specification is noteworthy in the sphere of luggage detection as it brings with it a significant advantage: the comparatively low processing resources required by a CNN as opposed to other neural network models such as Recurrent Neural Networks (RNNs). Generally, RNNs are preferred over CNNs if time dependencies occur. Using a CNN, accurate time dependency is neglected for the benefit of processing resources. For the present use case of luggage detection and classification, accurate time dependency is not necessary, and if needed, it can be implemented in a post-processing step after processing by the CNN. Thus, a distributed approach may be implemented where fist, a resource efficient CNN does the classification, and a different mechanism processes any time dependencies, where needed.

CNNs are particularly suited for processing image data, in particular if time dependencies do not play a role or can be neglected. They are a class of deep learning models that are structured to mimic the connectivity pattern between neurons in the human brain. This architecture excels in detecting patterns, especially spatial patterns in images, through its layer hierarchy that filters complex patterns into simpler features. Thus they are highly effective for image-related tasks, such as the luggage detection method proposed here.

The noteworthy advantage derived from using a CNN lies in the fact that this architecture is much less computationally intensive than other deep learning models like RNNs. Lower computational requirements mean that the method can be implemented on-site, or 'on-premise' as it is often referred to. This is a substantial benefit in settings where data confidentiality and security are crucial, or where internet connectivity is unreliable. An on-premise implementation allows data to remain within the local network and not be transmitted over the internet, thereby reducing security risks and increasing execution speeds.

In essence, this stipulation nurtures a more efficient, secure, and locally implementable luggage detection method that significantly improves the classification process. With the union of Convolutional Neural Network architecture with machine learning algorithms, this method exemplifies a luggage detection system that is well-suited for the state-of-the-art technology era.

The luggage detection method might also include the step of classifying the physical luggage item as belonging to a specific luggage type class. This classification is based on the highest probability value assigned among all captures of a particular physical luggage item. Furthermore, this classification step could be performed by the processing machine learning model already established or by a separate post-processing step, offering versatility in the execution flow. Alternatively, a post-processing machine learning model, which may preferably have a Recurrent Neural Network (RNN) architecture, may be tasked with further precise classification.

This additional step presents several enhancements and beneficial effects to the luggage detection method. Firstly, classification based on the highest probability value among all captures of a physical luggage item allows for a more robust recognition and identification process. As each capture of the luggage item has the chance to contribute a probability value, the system can aggregate these influences to derive a more reliable prediction of the luggage type.

Secondly, using the processing machine learning model to perform the classification allows for a more streamlined workflow. It builds up on the processes and information already established earlier in the method, capitalizing on the resources and data structures already in use. As a result, the need for additional computational resources or memory storage for a separate classification step may be minimized.

Alternatively, when it could be beneficial to have a separate or distinct step or module for classification purposes in certain operational or computational scenarios, the method allows for such flexibility. This could be particularly advantageous in situations where the classification step requires different computation resources or processes from the initial processing step, or where it is preferable to segregate these steps for easier system monitoring and debugging.

In cases where a post-processing machine learning model is used for classification, it may comprise a Recurrent Neural Network (RNN) architecture. RNNs, with their feedback connections, are known to have a "memory" of previous inputs in their hidden layers. This makes them particularly effective for tasks where contextual information or temporal sequences are important, potentially improving the efficacy of the classification step.

In conclusion, this extension introduces significant improvements to the luggage detection method. It offers a robust and versatile approach that takes into account multiple captures of a luggage item, and allows for flexibility and adaptability in the classification step. Whether through a single streamlined process or a distinct post-processing task, the classification of the physical luggage item is accomplished, thus providing a deeper level of specificity and accuracy in the luggage detection and classification process.

4 The method could additionally involve performing the mentioned steps for several physical luggage items being carried by an individual. For each of the luggage type classes, a person-specific counter is set up, counting the number of physical luggage items per luggage type class being carried by the person.

This addition to the luggage detection method adds another layer of sophistication and provides significant benefits. The ability to detect and classify multiple luggage items carried by a person brings considerable advantages in terms of thoroughness and completeness of the luggage detection process. This makes the method more thorough, covering all luggage items with the person rather than just one, making the method more effective in contexts where a person might be carrying more than one piece of luggage.

Moreover, the use of a person-specific counter for each luggage type class adds to the granularity and precision of the luggage tracking system. It provides specific quantitative information about the types of luggage items a person is carrying at any given time, offering a more detailed portrait of the luggage scenario. This extra layer of information can be exceedingly valuable in understanding and managing luggage flows and patterns at a granular level in places like airports, bus stations, or train stations.

For instance, the system can track and differentiate a person carrying two suitcases and a backpack from another person carrying just a single duffle bag. Such granular information can be highly valuable for statistical data analysis, resource planning, and decision-making processes in various operational contexts.

A specific use-case, envisioned with the implementation of this method to overcome travel complexities, could involve a travel provider, like an airline, a coach travel company, and/or a railroad company.

With the luggage detection method that classifies luggage items and keeps track of each luggage type class for individuals, the travel provider could leverage this to manage luggage handling in a more efficient and proactive way.

Suppose a person is found to be carrying too many items of a particular luggage type class - or even combined - through the luggage detection system interconnected with the service provider's app via API. The travel provider can then initiate actions which could include requesting an additional payment for extra luggage handling, directing the person to check-in some of their luggage items, or asking the person to discuss with a service representative to find the best solution.

For instance, if the detection system identifies an individual carrying more suitcases than permitted as per their ticket information, the system can automatically send a message to the individual's mobile device, provided that the person has the travel provider's mobile app installed.

The message might inform the person about the luggage count discrepancy and present them with several options to resolve the situation, such as paying an additional fee for the extra luggage or checking in one of the luggage items.

Aside from handling excess luggage scenarios, the travel provider can use the luggage count information collected by the detection method to estimate whether the available space in the transport medium - be it an airplane, train, or bus - is sufficient or not.

In a scenario where the travel provider operates a small coach service, and the luggage detection method alerts them that several passengers are carrying an extensive number of large suitcases, the provider could then decide to allocate an additional luggage trailer for the journey or even advise passengers beforehand to limit their luggage due to space constraints.

To sum up, the integration of the method into travel providers' existing technology infrastructure can substantially augment their luggage management capabilities. By providing real-time, accurate information about passengers' luggage, the method enables travel providers to take proactive steps in managing their luggage capacity and ensuring smoother, more efficient, and more satisfying travel experiences for their passengers.

In essence, this extension enriches the proposed luggage detection method, offering a more nuanced and comprehensive luggage detection and tracking system. It introduces the capability to account for multiple luggage items per person and per type, drastically improving the effectiveness, accuracy, and information quality of the luggage detection method.

5 The luggage detection method might also include the step of determining, based on the number of physical luggage items per luggage type class carried by the person, whether the luggage items comply with a specific luggage rule. If the luggage rule is not complied with, an action is triggered. The options for such actions could vary and may include: sending a notice to a portable device of the person; displaying a visually perceptible notice to the person; attaching a label to a virtual representation of the person; obstructing the person's passage using a barrier; or even initiating a payment process for the luggage items exceeding the luggage rule, such as a maximum number of luggage items.

The inclusion of this additional step is pivotal in enhancing the functionality and applicability of the luggage detection method. Establishing whether the luggage items comply with a specific luggage rule based on the number of physical luggage items per luggage type class introduces an element of control and management into the detection process.

The prospect of triggering an action when the rule is not complied with provides a means of response or recourse for circumstances where luggage regulations are flouted. This greatly expands the usefulness of the luggage detection method, transforming it from a passive detection and categorization tool to an active administration and management system.

The range of possible actions that can be triggered provides an additional layer of flexibility, further enhancing the applicability of the system. Sending a notice to the person's portable device or displaying a visually perceptible notice can serve as an immediate and effective way of alerting the user about the violation of luggage rules. On the other hand, blocking the person's pathway with a barrier or initiating a payment process provides tangible responses that go beyond mere warnings and take further steps to manage the situation.

Moreover, allocating a label to a virtual representation of the person enables more nuanced tracking and administration. Labels can be used subsequently in different ways, such as flagging the person for further checks or directing the person to specific lanes or counters meant for individuals carrying excess luggage.

In conclusion, the inclusion of this step in the method is a significant advancement, paving the way for a more robust and versatile luggage detection system. By incorporating the means to enforce luggage rules and trigger appropriate actions accordingly, the method takes a big step forward, evolving from a basic detection tool to a comprehensive luggage management system.

6 The method can also be extended to perform the said steps continuously for many individuals. Here, for each of the luggage type classes, a superordinate counter is set, which counts how many physical luggage items per luggage type class are present, preferably in a predetermined area in a building, such as an airport, train station, or bus station. This superordinate counter could potentially be linked to predefined ticket information, such as a flight transfer number, train transfer number, or bus transfer number, provided by an external or internal access management system.

Carrying out the luggage detection method continuously for multiple individuals greatly improves its efficiency and applicability, especially in high-traffic environments like airports or train stations. This continuous operation allows the method to provide real-time tracking and analysis of luggage items, enhancing the management and control of luggage flow in these areas.

Setting a superordinate counter for each luggage type class further bolsters the luggage detection method's effectiveness. This counter allows the system to keep track of the number of luggage items present per luggage type class across the entire location, offering a high-level, aggregated view of the luggage scenario. This global count can provide valuable insights into patterns and trends in luggage types, which can aid in resource planning, security management, and operational decision-making.

Preferably, the superordinate counter is assigned to a predefined ticket information, expanding the method's utility yet further. This attachment provides a link between individual passengers or commuters and their respective luggage items, allowing for a more personalized and precise tracking and management of luggage items. With this feature, the system can monitor and manage luggage items not only based on their type but also based on specific passenger information, creating a more comprehensive and nuanced luggage tracking method.

Moreover, the focus on a specific, predetermined area in a building serves to limit the field of operation to a manageable size. This not only makes it easier to monitor and control but also ensures only relevant data are considered in the luggage detection process.

In essence, these features and benefits underline the value and significance of this extension to the luggage detection method. The method's continuous operation for multiple individuals, its use of a superordinate counter, its optional attachment to ticket information, and its focus on a specific area within a building all contribute to its robustness, comprehensiveness, precision, and practicality as a luggage detection and management system.

7 The luggage detection method may also incorporate an additional step before processing: preprocessing the image data. This preprocessing step may itself be carried out by a machine learning model and can comprise various actions such as masking part of the image data, transforming the image data into greyscale, monochrome, or black-and-white scale, or defining at least one region-of-interest within the image data. This region-of-interest, potentially defined as a bounding box, may include at least part of the capture of the physical luggage item.

Incorporating a preprocessing step into the luggage detection method introduces significant advantages and enhancements to the method. First and foremost, preprocessing readies the image data for the subsequent processing step, improving the effectiveness and efficiency of the method. It can enhance certain features, remove irrelevant information or noise, and generally rework the raw image data into a format that is more conducive for the subsequent processing step.

Masking part of the image data can help remove irrelevant or distracting elements in the image captures, allowing the method to focus more accurately on the actual luggage items. Transforming the image data into different scales like greyscale, monochrome, or black-and-white can help enhance specific features or patterns in the image data that are relevant for luggage detection and classification. This may further reduce the processing resources needed.

Setting a region-of-interest, possibly in the form of a bounding box, within the image data offers a more targeted perspective for the luggage detection method. By focusing on specific portions of the full image where the luggage items are expected to appear, the method can be more effective and efficient in processing image data.

The versatility introduced by optionally performing preprocessing by a machine learning model brings in an adaptable factor in the method. Depending on the specific requirements or constraints in a given operational context, this flexibility will enable the system to choose the most suitable preprocessing actions.

In conclusion, the optional addition of the preprocessing step to the luggage detection method greatly enhances its efficacy and versatility. By optimally preparing the image data for the subsequent processing step, the method supports more accurate and efficient luggage detection and classification, transforming it into a comprehensive luggage management system.

The luggage detection method can run in various locations such as a building, airport, train station, or bus station, and it can operate without transferring data to a cloud platform.

This feature of local processing, devoid of the need for data transfer to a cloud platform, brings forth considerable advantages. For one, it bolsters the privacy and security aspects of the method. Concerns over the security of cloud platforms and potential data breaches, while minimal, do exist, and avoiding the use of such platforms removes the risk entirely. There is also no dependence on consistent internet connectivity for the method to function. This is particularly advantageous in regions or situations where internet availability may be unreliable, thus ensuring that the luggage detection method remains operational at all times.

Moreover, the absence of any cloud data transfer can result in faster processing and response times. Local processing eliminates the latency involved in transferring data to and from a cloud platform, making the entire process more efficient and responsive. This reduced latency can be crucial in busy, high-traffic environments such as airports or train stations, enabling the method to provide real-time luggage detection with minimal delay.

Finally, implementing the method locally within a specific location like a building, airport, train station, or bus station, allows much more targeted and context-aware luggage detection. The system can be optimized or customized to suit the specific characteristics or requirements of the location, allowing for more effective and accurate luggage detection.

In conclusion, the implementation of the luggage detection method in a local site without the need for any data transfer to a cloud platform greatly improves the efficiency, security, and adaptability of the method. This localized operation enhances the robustness and reliability of the luggage detection method, making it a highly relevant solution for the fast-paced and dynamic environments of today.

8 The luggage detection method may also involve receiving image data from multiple optical sensor devices, particularly including cameras or depth cameras. The image data is captured regarding a predetermined area within a building, airport, train station, or bus station.

The use of multiple optical sensor devices, be it standard cameras or depth cameras, provides a more comprehensive and multifaceted perspective for the luggage detection method. With multiple devices, the method can capture a larger area or different angles, ensuring that no luggage item is missed or incorrectly classified due to it being obscured or poorly visible from a single viewpoint.

Depth cameras, in particular, can provide additional depth data along with the regular image data. This depth information can be beneficial in enhancing the accuracy and robustness of the luggage detection method, enabling it to more accurately discern and classify luggage items even in crowded or cluttered environments.

The emphasis on capturing data with respect to a predetermined area adds another layer of reliability and precision to the method. Such an approach ensures that the resources and processes of the method are concentrated on a specific area of interest, improving the efficiency and accuracy of the method. Whether it's a building, airport, train station, or bus station, the method's focus on a predetermined area helps tailor its operations to suit its specific environment and operational context.

In conclusion, obtaining image data from multiple optical sensor devices and focusing on a predetermined area creates a luggage detection method that is more comprehensive, precise, and efficient. It enables the method to capture and analyze a broader and more detailed view of the luggage scenario in a given location, enhancing its effectiveness and reliability as a luggage detection tool.

9 The method could also include a computer-implemented process for training a machine learning model for use in the luggage detection method. This training process comprises providing a set of training images that include an illustration of a physical luggage item, assigning labels to each of the training images that are indicative of a corresponding luggage type class among multiple luggage type classes, and expanding the set of training images by creating duplicates of one or more of the training images and applying various operations to these duplicates, such as hiding parts of the image, adjusting their tilt or scale, or including noise image data, particularly those representing irrelevant accessories.

Including a training phase for the machine learning model brings additional depth and dynamism to the luggage detection method. Training a machine learning model involves adjusting its parameters using known data (the training images) to improve its performance on future, unknown data. In this context, the model is trained to recognize different types of luggage based on the labels in the training set. This results in a model that is custom-tailored to the specific needs of the application, enhancing its effectiveness and accuracy in recognizing and classifying luggage items in real-world conditions.

Using a set of training images that illustrate physical luggage items provides the machine learning model with a wealth of real-world examples to learn from. This enhances the model's ability to recognize and classify similar luggage items in the future, improving the overall accuracy and reliability of the luggage detection method.

Assigning labels to the training images that indicate the corresponding luggage type class allows the machine learning model to learn the distinguishing features and characteristics of different types of luggage. This helps the model make accurate predictions when classifying new, unlabeled luggage items.

Furthermore, expanding the set of training images by creating duplicates and applying various transformations and modifications enhances the diversity and richness of the training data. This process, often referred to as data augmentation, helps the model generalize better, improving its ability to accurately classify new, unseen luggage items. By including transformed or modified versions of the original training images, the model is exposed to a wider range of potential situations and scenarios, improving its robustness and adaptability.

In conclusion, the inclusion of a training step for the machine learning model significantly enhances the power and versatility of the luggage detection method. The process of training the model helps shape it to the specific requirements of the task, and the use of diverse and representative training data ensures that the model can accurately and effectively classify a wide range of luggage items under real-world conditions.

10 The training process for the machine learning model might also include an automated labeling step. Labels are assigned to each of the training images based on a major machine learning model, which may preferably comprise a Recurrent Neural Network (RNN) architecture.

The inclusion of automatic labeling-where labels indicative of the luggage type class are assigned to training images-via a major machine learning model significantly optimizes the training process. Manual labeling is typically labor-intensive and prone to inconsistency or error. Automating this process, especially through a robust machine learning model, ensures speed, consistency, and accuracy, enhancing the overall efficiency and quality of the model training process.

Specifically, the use of a major machine learning model further strengthens this automatic labeling. Such a model can learn from complex patterns in data and accurately assign labels to training images, providing a robust and reliable way to annotate the training set.

The possibility of using a Recurrent Neural Network (RNN) architecture for the major machine learning model is particularly advantageous. RNNs are a class of neural networks suitable for sequence prediction problems, giving them an edge in situations where spatial and temporal dependencies are essential. This makes RNNs particularly effective in recognizing patterns between sequential data and providing highly accurate model predictions.

In essence, the automated labeling based on a Recurrent Neural Network shift the luggage detection method towards a more sophisticated and efficient machine learning model training process. Automatically labeling the training images enhances the overall efficiency, accuracy, and consistency of the model training process, ensuring a more effective luggage detection method.

According to a second aspect of the present invention, it may be provided a use of a machine learning model in a method according to the first aspect of the present invention. The machine learning model may be trained according to what is said above.

According to a third aspect of the present invention, it may be provided a data processing apparatus being configured to perform a method according to the first aspect of the present invention.

According to a fourth aspect of the present invention, a luggage detection system is proposed which comprises at least one optical sensor device. This device is strategically positioned at a certain height, which could range from a maximum of 300 cm to a preferred 100 cm, above the floor on which a person carries at least one physical luggage item. The sensor device is designed to capture image data, which includes at least one capture of the physical luggage item carried by the person.

The system could optionally include a spatial boundary that serves as a passageway for persons and physical luggage items. This spatial boundary could vary in height, with a maximum of 160 cm and potentially going down to 100 cm above the floor. The optical sensor device could ideally be arranged on an element of this spatial boundary, which itself could be narrowed down to build a maximum passageway preferably of 15 cm in the direction of the passageway.

The sensor device itself could potentially comprise a spatial observation area that extends from the floor up to a maximum height that corresponds to the height of the spatial boundary or even higher. Optional features also include at least one barrier which can be configured to block and/or unblock the passageway based on whether a luggage rule is complied with. If such a barrier is included, it is preferably attached to the spatial boundary.

The system also includes a data processing apparatus, similar to the one proposed in the third aspect of the present invention. This apparatus is preferably located on site, eschewing the need for a cloud platform for data processing.

This system represents an embodiment of the luggage detection method that incorporates several elements to enhance its efficiency, flexibility, and effectiveness. The use of optical sensor devices strategically positioned to capture image data of the luggage items is critical for its operation. These devices capture visual information of the luggage items, enabling the system to detect and classify these items based on the subsequent data processing steps.

The inclusion of a spatial boundary presents a structured passageway for people and their luggage, creating a controlled environment that can enhance the accuracy and reliability of the luggage detection process. The optional barrier mechanism to control the passageway further strengthens the overall system, enabling it to react and respond proactively based on whether the luggage rules are being adhered to.

Further, the position of the system and/or sensor device(s) near the floor have the advantage that privacy of persons is respected, i.e., the face or other privacy relevant characteristics are not tracked.

The on-site data processing apparatus assures the system's capability to process the captured image data in real-time, right where the data is being captured. This apparatus removes the need for cloud platforms for data processing, enhancing data privacy and security, reducing latency, and ensuring reliable operation even in regions with poor internet connectivity.

Overall, the luggage detection system presents a robust, comprehensive, and user-friendly system for efficient, reliable, and accurate luggage detection and classification in various environments. Through a clever arrangement of sensor devices, passageways, and an on-site data processing apparatus, the system embodies the principles of the luggage detection method in a highly effective and practical manner.

According to a fifth aspect of the present invention, a computer program or a computer-readable medium may be provided, having stored thereon a computer program, the computer program comprising instructions which, when the program is executed by a computer, cause the computer to carry out a method according to the first aspect of the present invention.

All features, technical implementation details and advantages described with respect to any one of the aspects of the present invention described herein are self-evidently mutatis mutandis applicable for any one of the other aspects of the present invention and vice versa.

### BRIEF DESCRIPTION OFTHE DRAWINGS

The present invention will be explained in more detail, by way of example, with reference to the drawings in which:
- Figure 1:: shows a flow chart illustrating steps according to embodiments of the present invention;
- Figure 2:: shows a highly schematic view of a group of people having luggage items according to embodiments of the present invention;
- Figure 5:: shows a highly schematic view of a person and a luggage item which is captured by a camera according to embodiments of the present invention.

### DETAILED DESCRIPTION OF EMBODIMENTS

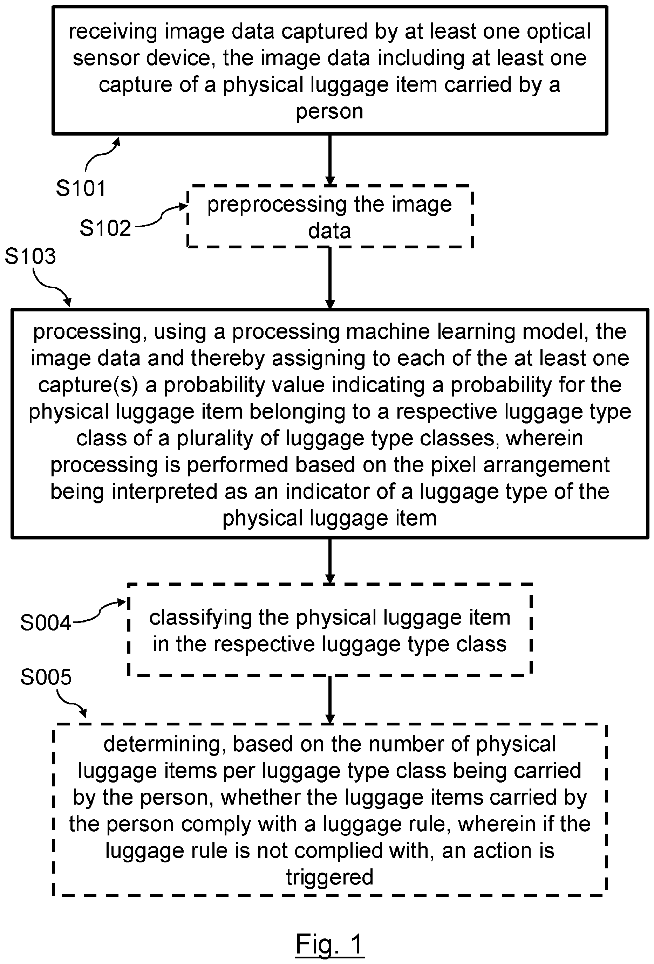

Figure 1 shows a flow chart illustrating steps according to embodiments of the present invention, wherein optional steps are illustrated by broken lines.

In the receiving step S101, it is performed receiving image data captured by at least one optical sensor device S, the image data including at least one capture of a physical luggage item L carried by a person P.

In the preprocessing step S102, preprocessing of the image data is performed. This may be performed by a preprocessing machine learning model, wherein preprocessing S102 includes one or more of: masking part of the image data; transforming the image data into greyscale and/or monochrome scale and/or black-and-white-scale; defining at least one region-of-interest, in particular as a bounding box, within the image data, wherein the at least one region-of-interest may include at least part of the capture of the physical luggage item.

In the processing step S103, it is performed processing, using a processing machine learning model, the image data and thereby assigning to each of the at least one capture(s) a probability value indicating a probability for the physical luggage item L belonging to a respective luggage type class of a plurality of luggage type classes, wherein processing is performed based on the pixel arrangement being interpreted as an indicator of a luggage type of the physical luggage item L.

In the classifying step S104, it may be performed classifying the physical luggage item in the respective luggage type class. Classifying S104 may be performed based on the highest probability value among all capture(s) of the physical luggage item L. Optionally, classifying S104 may be performed by the processing machine learning model, or may be performed by a postprocessing step separately from the processing machine learning model, or classifying S104 is performed by a postprocessing machine learning model which may preferably comprise a Recurrent Neural Network (RNN) architecture.

In the determining step S105, it may be performed determining, based on the number of physical luggage items per luggage type class being carried by the person, whether the luggage items carried by the person comply with a luggage rule, wherein if the luggage rule is not complied with, an action is triggered. Optionally, the action includes one or more of the following: sending a notice to a portable device of the person P; displaying a visually perceptible notice to the person P; allocating a label to a virtual representation of the person P; blocking a passageway of the person P by means of a barrier; triggering a payment process for the luggage items L exceeding the luggage rule, e.g., a maximum number of luggage items L.

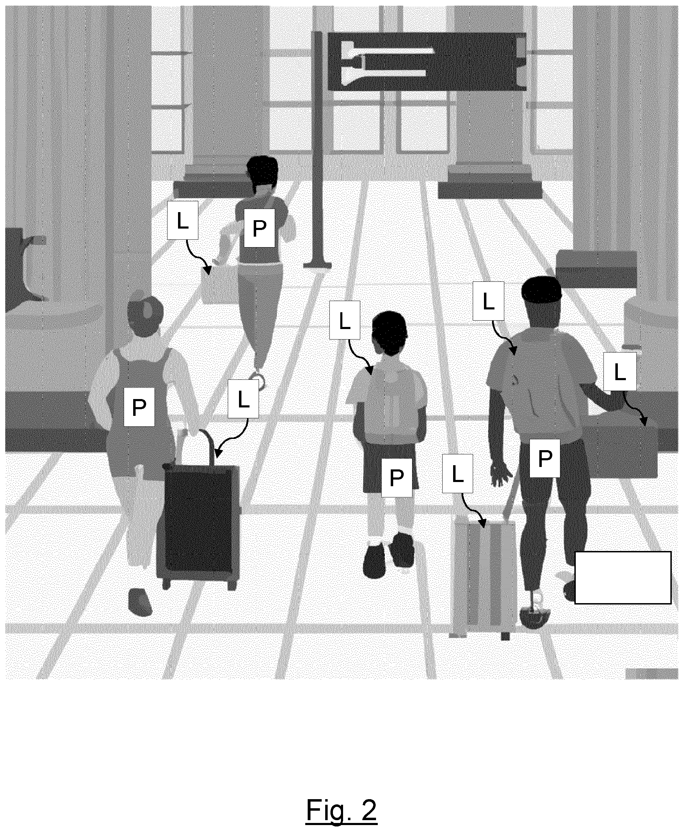

Figure 2 shows a highly schematic view of a group of people P having luggage items L according to embodiments of the present invention. The luggage items L are of different luggage type classes, i.e., backpacks, duffle bags, suitcases, hand bags, laptop cases. Each of the luggage items L have specific characteristics that allow to classify them to a corresponding luggage type class, e.g. the way of carrying (hanging over the shoulder or being pulled over the floor or being carried in the hand), the outer appearance (geometric form), the zipper position or positions of other characteristic luggage elements.

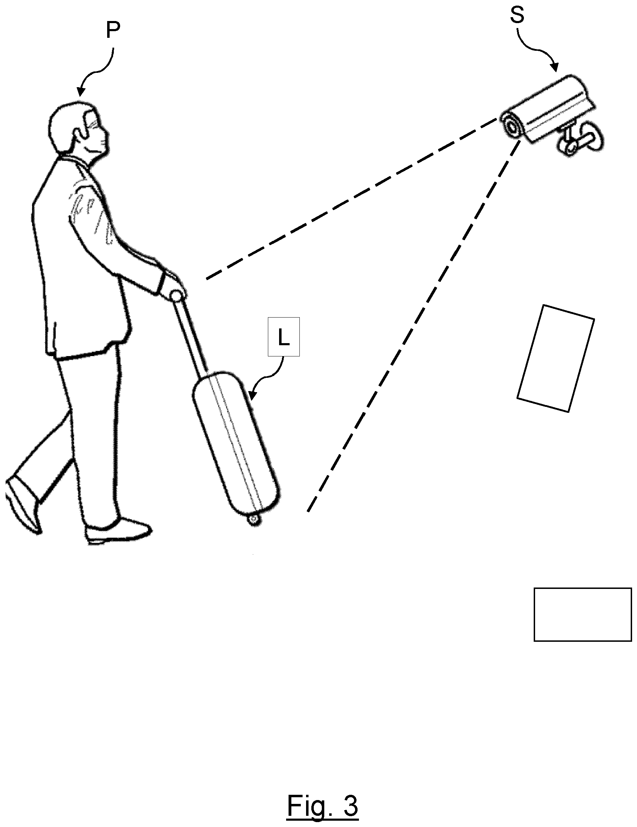

Figure 3 depicts a highly schematic view of a person P and a luggage item L which is captured by a camera being the sensor device S according to embodiments of the present invention. The camera may e.g. be mounted at a wall in an airport hallway.

### Machine Learning

Certain embodiments of the invention may be based on using a machine learning model or machine learning algorithm. Machine learning may refer to algorithms and statistical models that computer systems may use to perform a specific task without using explicit instructions, instead relying on models and inference. For example, in machine learning, instead of a rule-based transformation of data, a transformation of data may be used that is inferred from an analysis of historical and/or training data. For example, the content of images may be analyzed using a machine learning model or using a machine learning algorithm. In order for the machine learning model to analyze the content of an image, the machine learning model may be trained using training images as input and training content information as output. By training the machine learning model with a large number of training images and/or training sequences (e.g. words or sentences) and associated training content information (e.g. labels or annotations), the machine learning model "learns" to recognize the content of the images, so the content of images that are not included in the training data can be recognized using the machine learning model. The same principle may be used for other kinds of sensor data as well: By training a machine learning model using training sensor data and a desired output, the machine learning model "learns" a transformation between the sensor data and the output, which can be used to provide an output based on non-training sensor data provided to the machine learning model. The provided data (e.g., sensor data, meta data and/or image data) may be preprocessed to obtain a feature vector, which is used as input to the machine learning model.

Machine learning models may be trained using training input data. The examples specified above use a training method called "supervised learning". In supervised learning, the machine learning model is trained using a plurality of training samples, wherein each sample may comprise a plurality of input data values, and a plurality of desired output values, i.e., each training sample is associated with a desired output value. By specifying both training samples and desired output values, the machine learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm). Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. Reinforcement learning is a third group of machine learning algorithms that may be used to train the machine learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine learning algorithms. For example, feature learning may be used. In other words, the machine learning model may at least partially be trained using feature learning, and/or the machine learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine learning model may at least partially be trained using anomaly detection, and/or the machine learning algorithm may comprise an anomaly detection component.

In some examples, the machine learning algorithm may use a decision tree as a predictive model. In other words, the machine learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree. Association rules are a further technique that may be used in machine learning algorithms. In other words, the machine learning model may be based on one or more association rules. Association rules are created by identifying relationships between variables in large amounts of data. The machine learning algorithm may identify and/or utilize one or more relational rules that represent the knowledge that is derived from the data. The rules may e.g. be used to store, manipulate or apply the knowledge.

Machine learning algorithms are usually based on a machine learning model. In other words, the term "machine learning algorithm" may denote a set of instructions that may be used to create, train or use a machine learning model. The term "machine learning model" may denote a data structure and/or set of rules that represents the learned knowledge (e.g., based on the training performed by the machine learning algorithm). In embodiments, the usage of a machine learning algorithm may imply the usage of an underlying machine learning model (or of a plurality of underlying machine learning models). The usage of a machine learning model may imply that the machine learning model and/or the data structure/set of rules that is the machine learning model is trained by a machine learning algorithm.

For example, the machine learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine learning model may be a Bayesian network, which is a probabilistic directed acyclic graphical model. A Bayesian network may represent a set of random variables and their conditional dependencies using a directed acyclic graph. Alternatively, the machine learning model may be based on a genetic algorithm, which is a search algorithm and heuristic technique that mimics the process of natural selection.

### General aspects

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE NUMBERS

- P: person[s]
- S: sensor device[s]
- L: luggage item[s]
- S101: receiving step
- S102: preprocessing step
- S103: processing step
- S104: classifying step
- S105: determining step

## Claims

1. A computer-implemented luggage detection method, the luggage detection method comprising:
receiving (S101) image data captured by at least one optical sensor device (S), the image data including at least one capture of a physical luggage item (L) carried by a person (P);
processing (S103), using a processing machine learning model, the image data and thereby assigning to each of the at least one capture(s) a probability value indicating a probability for the physical luggage item (L) belonging to a respective luggage type class of a plurality of luggage type classes, wherein processing (S103) is performed based on the pixel arrangement being interpreted as an indicator of a luggage type of the physical luggage item (L).

2. The computer-implemented luggage detection method of any one of the preceding claims, wherein the processing machine learning model comprises a Convolutional Neural Network (CNN) architecture.

3. The computer-implemented luggage detection method of any one of the preceding claims, further comprising:
classifying (S104) the physical luggage item in the respective luggage type class, wherein classifying is performed based on the highest probability value among all capture(s) of the physical luggage item (L);
optionally wherein classifying (S104) is performed by the processing machine learning model, or classifying (S104) is performed by a postprocessing step separately from the processing machine learning model, or classifying is performed by a postprocessing machine learning model which may preferably comprise a Recurrent Neural Network (RNN) architecture.

4. The computer-implemented luggage detection method of claim 3, wherein steps of the method are performed for a plurality of physical luggage items (L) carried by the person (P), wherein for each of the luggage type classes, a person-specific counter is set, thereby counting the number of physical luggage items (L) per luggage type class being carried by the person (P).

5. The computer-implemented luggage detection method of claim 4, further comprising:
determining (S105), based on the number of physical luggage items (L) per luggage type class being carried by the person (P), whether the luggage items (L) carried by the person (P) comply with a luggage rule, wherein if the luggage rule is not complied with, an action is triggered,
optionally the action including one or more of the following: sending a notice to a portable device of the person (P); displaying a visually perceptible notice to the person (P); allocating a label to a virtual representation of the person (P); blocking a passageway of the person (P) by means of a barrier; triggering a payment process for the luggage items (L) exceeding the luggage rule, e.g., a maximum number of luggage items (L).

6. The computer-implemented luggage detection method of one of claims 3 to 5, wherein steps of the method are performed continuously for a plurality of persons (P), wherein for each of the luggage type classes, a superordinate counter is set, thereby counting how many physical luggage items (L) per luggage type class are present,
preferably the superordinate counter being assigned to a predefined ticket information, in particular a flight transfer number and/or train transfer number and/or bus transfer number, whereby the ticket information can be provided by an external access management system and/or internal access management system, and/or
preferably in a predetermined area in a building, in particular airport and/or train station and/or bus station.

7. The computer-implemented luggage detection method of any one of the preceding claims, the method further comprising:
prior to processing (S103), preprocessing (S102) the image data, optionally being performed by a preprocessing machine learning model, wherein preprocessing (S102) includes one or more of:
masking part of the image data;
transforming the image data into greyscale and/or monochrome scale and/or black-and-white-scale;
defining at least one region-of-interest, in particular as a bounding box, within the image data, wherein the at least one region-of-interest may include at least part of the capture of the physical luggage item (L).

8. The computer-implemented luggage detection method of any one of the preceding claims, wherein the obtained image data are obtained by a plurality of optical sensor devices (S), in particular including cameras and/or depth cameras, wherein the image data are captured with respect to a predetermined area in a building and/or airport and/or train station and/or bus station.

9. A computer-implemented method for training a machine learning model for use in a method according to any one of claims 1 to 8, comprising:
providing a set of training images, the training images including an illustration of a physical luggage item (L);
assigning labels to each of the training images, wherein the labels are indicative for a corresponding luggage type class of a plurality of luggage type classes;
expanding the set of training images and thereby obtaining an expanded set of training images by performing one or more duplicating operations for one or more of the training images, and performing one or more of the following operations for the one or more duplicates:
hide part(s) of a respective duplicate image;
tilt and/or scale a respective duplicate image;
include noise image data into a respective duplicate image, in particular irrelevant accessories.

10. The computer-implemented method of claim 9, wherein assigning labels to each of the training images is automatically performed based on a major machine learning model that preferably comprises a Recurrent Neural Network (RNN) architecture.

11. Use of a machine learning model in a method according to any one of claims 1 to 8, wherein the machine learning model is trained by a method of claim 9 or 10.

12. A data processing apparatus being configured to perform a method according to any one of claims 1 to 8.

13. A luggage detection system, comprising:
at least one optical sensor device (S) being positioned at a maximum of 300, preferably 250 cm, preferably 200 cm, preferably 150 cm, preferably 100 cm, above a floor, on which a person (P) carries at least one physical luggage item (L) and being configured to capture image data including at least one capture of the physical luggage item (L) carried by the person (P);
optionally, a spatial boundary for the passage of persons (P) and physical luggage items (L), preferably wherein the spatial boundary comprises a height of maximum 160 cm, in particular 140 cm, more particular 120 cm, even more particular 100 cm above the floor, preferably wherein the at least one optical sensor device (S) is arranged on an element of the spatial boundary, preferably the spatial boundary building a maximum passageway of 50 cm, in particular 30 cm, more particular 15 cm, in the direction of passageway;
optionally whereby the sensor device (S) comprises a spatial observation area, which may extend from the floor, preferably to a maximum height corresponding to the height of the spatial boundary or to a maximum height higher than the corresponding height of the spatial boundary;
optionally, at least one barrier which is configured to block and/or unblock the passageway depending on whether a luggage rule is complied with, preferably whereby the barrier is attached to the spatial boundary;
a data processing apparatus according to claim 12, preferably wherein the data processing apparatus is located on site, i.e, without using a cloud platform.

14. The luggage detection system of claim 13,
wherein the at least one sensor device (S) comprises a spatial observation area comprising an area before the barrier and an area after the barrier with respect to the passageway direction, or
the at least one optical sensor device (S) comprising a spatial observation area comprising an area before the barrier with respect to the passageway direction and a second optical sensor device (S) comprising a second spatial observation area comprising an area after the barrier with respect to the passageway direction.

15. A computer program or a computer-readable medium having stored thereon a computer program, the computer program comprising instructions which, when the program is executed by a computer, cause the computer to carry out a method of any one of claims 1 to 10.
